# EUROPEAN PATENT APPLICATION

(11) **EP 4 613 550 A1**
(43) Date of publication of application: **10.09.2025**
(21) Application number: 23897376.2
(22) Date of filing: 02.11.2023
(51) Int. Cl.: B60N 2/427

(54) **VEHICLE OCCUPANT PROTECTION DEVICE**

(30) Priority: 02.12.2022 JP 2022193502; 02.12.2022 JP 2022193503
(71) Applicant: Autoliv Development AB, 44783 Vargarda (SE)
(72) Inventor: SAITO, Hiroyuki, Yokohama-shi, Kanagawa 222-8580 (JP); MAKIOKA, Takayuki, Yokohama-shi, Kanagawa 222-8580 (JP)
(74) Representative: Novagraaf International SA
(86) International application number: PCT/JP2023/039681
(87) International publication number: WO 2024/116721

(57) **Abstract**

PROBLEM

To provide a vehicle occupant protection device capable of efficiently restraining an occupant.

RESOLUTION MEANS

A protection device 100 includes a vehicle seat 102 and restraint units 108a, 108b for restraining an occupant 104 seated in the seat 102 in the event of a vehicle emergency. The seat 102 has a seat cushion part 106 that supports the buttocks of the occupant 104 and a seat back part 107 that supports the back of the occupant 104. In the event of a vehicle emergency, the restraint units 108a, 108b are dynamically deformable so as to wrap around the peripheral portion 109 of the seat back part 107 to the front of the occupant 104 and restrain the upper body or head of the occupant 104.

## Description

### TECHNICAL FIELD

The present invention relates to a vehicle occupant protection device for restraining an occupant in the event of a vehicle emergency.

### BACKGROUND ART

Conventionally, occupant restraint devices mounted on vehicles have been evaluated based on predetermined occupant orientation, occupant physique, and seat position in accordance with safety regulations and safety performance tests (NCAP: new car assessment program). For this reason, many of the current occupant restraint devices are designed to be optimized in accordance with the examples in these evaluation criteria.

For example, according to the occupant restraint device 100 developed by the present applicant in Patent Document 1, as depicted in FIG. 2, assuming an occupant P seated in a seat 110, the occupant P can be fully restrained by airbags 120a, 120b supported by tensile cloth 130a, 130b.

### RELATED ART DOCUMENTS

### PATENT DOCUMENTS

Patent Document 1: Japanese Patent No. 6892519

### SUMMARY OF THE INVENTION

### PROBLEM TO BE SOLVED BY THE INVENTION

In recent years, with the spread of technologies such as Advanced Driver-Assistance Systems (ADAS) and Highly Automated Driving (HAD), passenger orientation within the vehicle cabin have become more diverse. Therefore, there is demand for an occupant restraint device that can accommodate a wider variety of passenger orientations and seat positions.

In order to meet the demand described above, there may be a need for a method of restraining an occupant other than the method of restraining an occupant by greatly inflating and deploying airbags 120a, 120b, such as the occupant restraint device 100 of Patent Document 1. Furthermore, in this case as well, there is a demand for safer occupant restraint that reduces rebound after a collision.

In light of this manner of problem, an object of the present invention is to provide a vehicle occupant protection device capable of efficiently restraining an occupant.

### MEANS FOR SOLVING THE PROBLEM

In order to resolve the problems described above, a typical configuration of a vehicle occupant protection device according to the present invention includes:
a vehicle seat; and one or more restraint units for restraining an occupant seated in the vehicle seat in the event of a vehicle emergency, wherein the seat has a seat cushion part that supports the buttocks of the occupant and a seat back part that supports the back of the occupant, and the restraint unit is configured to dynamically deform from a peripheral portion of the seat back part to wrap around in front of the occupant in the event of a vehicle emergency, thereby restraining the occupant.

According to the configuration described above, in the event of an emergency, the restraint unit protrudes to the front of the seat back part and curves, thereby dynamically deforming to wrap around in front of the occupant, thereby restraining the occupant and preventing the occupant from moving forward. In particular, the vehicle occupant protection device is configured to be added to the peripheral portion of the seat back and can be integrated with the seat, so that the relative distance between the restraint unit and the occupant is not affected by the position of the seat within the vehicle cabin. Therefore, according to the configuration described above, stable occupant restraint performance can be achieved regardless of the seat position.

In the event of a vehicle emergency, the restraint unit may be dynamically deformed so as to wrap around the peripheral portion of the seat back part to the front of the occupant and restrain the upper body or head of the occupant.

According to the configuration described above, in the event of an emergency, the upper body and head of the occupant can be restrained by the restraint unit, thereby preventing the occupant from moving forward. Therefore, according to the configuration described above, stable occupant restraint performance can be achieved regardless of the seat position.

The vehicle occupant protection device may include an impact absorbing mechanism that absorbs impact when the restraint unit restrains the upper body or head of the occupant, and the impact absorbing mechanism may cause one or both of the seat cushion part and the seat back part to move forward in conjunction with the dynamic deformation of the restraint unit in the event of a vehicle emergency.

According to the configuration described above, when the restraint unit restrains the upper body and head of the occupant from the front, the seat moves forward due to the impact absorption mechanism, absorbing the kinetic energy when the occupant is restrained, suppressing the rebound phenomenon, and further reducing the injury level of the occupant.

The impact absorbing mechanism described above may include a weakened part provided on a frame of the seat back part, and the weakened part may deform so as to move the seat back part forward in conjunction with the dynamic deformation of the restraint unit in the event of a vehicle emergency.

According to the configuration described above, when the restraint unit restrains the upper body and head of the occupant from the front, the seat back part operates to tilt forward due to deformation of the weak part, thereby absorbing the kinetic energy when the occupant is restrained, suppressing the rebound phenomenon, and further reducing the injury level of the occupant.

The impact absorbing mechanism described above includes a seat slider unit that is provided on a floor of the vehicle and supports a seat cushion part, and the seat slider unit may move the seat cushion part forward in conjunction with the dynamic deformation of the restraint unit in the event of a vehicle emergency.

With the configuration described above, when the restraint unit restrains the upper body and head of the occupant from the front, the seat cushion part is slid forward by the seat slider unit, thereby absorbing the kinetic energy when the occupant is restrained, suppressing the rebound phenomenon, and further reducing the injury level of the occupant.

The restraint unit described above may include a plurality of restraint blocks connected so as to be aligned in the front-to-back direction of the seat back part in a non-operation state, and all or some of the plurality of restraint blocks may have a tapered portion on seat back part side.

According to the configuration described above, the plurality of restraint blocks utilize the tapered portions to curve inwardly toward the inside of the seat back part, enabling restraint of the occupant.

The vehicle occupant protection device may further include a slide shaft provided on the peripheral portion of the seat back part so as to extend in the front-to-back direction of the seat back part and slidably retain the restraint unit, and a first motor that slides the restraint unit forward in the event of an emergency.

According to the configuration described above, in the event of an emergency, the restraint unit can be moved forward of the seat to restrain the occupant.

The restraint unit described above may include a chain or wire that passes through and connects the plurality of restraint blocks, where the chain or wire passes through the tapered portion of each of the plurality of restraint blocks, and the chain or wire is pulled rearward in conjunction with the forward movement of the restraint unit, causing each of the plurality of restraint blocks to tilt toward the tapered portion, thereby causing the restraint unit to undergo the dynamic deformation.

According to the configuration described above, in an emergency, it is possible to restrain the occupant by dynamically deforming the restraint unit.

The restraint unit described above may further include a gear for winding the chain or a pulley for winding the wire, and a second motor for rotating the gear or the pulley, and the gear or the pulley rotates to wind up the chain or the wire, thereby pulling the chain or the wire rearward.

According to the configuration described above, in the event of an emergency, the restraint unit can be dynamically deformed by pulling the chain or wire rearward, thereby enabling restraint of the occupant.

The one or more restraint units may be provided in plurality, and the restraint units may be provided in pairs so as to be disposed on each of the peripheral portions on both sides in the width direction of the seat back part.

According to the configuration described above, a pair of restraint units can be utilized to efficiently restrain the upper body and head of the occupant.

The restraint unit may be dynamically deformable in the event of a vehicle emergency so as to extend forward from a side part of the seat cushion part and bend inward in the width direction of the seat cushion part to restrain the vicinity of the knees of the occupant from the front.

According to the configuration described above, in an emergency, the restraint unit can be utilized to prevent the knees, and the like of the occupant from moving forward. In particular, the vehicle occupant protection device is configured to be added to the side part of the seat cushion and can be integrated with the seat, so that the relative distance between the restraint unit and the knee and the like is not affected by the position of the seat track. Therefore, according to the configuration described above, stable occupant restraint performance can be achieved regardless of the seat track position.

The restraint unit described above may include a plurality of restraint blocks connected so as to be aligned in the front-to-back direction of the seat cushion part in a non-operation state, and all or some of the plurality of restraint blocks may have a tapered portion on seat cushion part side.

According to the configuration described above, by inclining each restraint block toward the tapered portion, the entire restraint unit can be curved toward the seat cushion part and thereby restrain the vicinity of the knees of the occupant.

The vehicle occupant protection device may further include a guide member provided on the side of the seat cushion part so as to extend in the front-to-back direction of the seat cushion part and slidably retain the restraint unit, and an actuator that slides the restraint unit forward in the event of an emergency.

According to the configuration described above, a mechanism for operating the restraint unit in the event of an emergency can be achieved, enabling restraint of the occupant in the vicinity of the knees.

The restraint unit described above may include a chain or wire that passes through and connects the plurality of restraint blocks, where the chain or wire passes through the tapered portion of each of the plurality of restraint blocks, and the chain or wire is pulled rearward in conjunction with the forward movement of the restraint unit, causing each of the plurality of restraint blocks to tilt toward the tapered portion, thereby causing the restraint unit to undergo the dynamic deformation.

According to the configuration described above, a mechanism for inclining each of the restraint blocks toward the tapered portion can be achieved; thereby bending the entire restraint unit toward the seat cushion part.

The restraint unit described above may further include a prescribed pulley and a gear that rotates in conjunction with the pulley, where the chain or wire is a chain that is meshed with the gear, and the vehicle occupant protection device may further include a pulley wire that connects the seat cushion part and the pulley, so that when the restraint unit moves forward, the pulley and the gear rotate by being pulled by the pulley wire, and the gear winds up the chain, thereby pulling the chain rearward.

According to the configuration described above, a mechanism for bending the entire restraint unit toward the seat cushion part can be achieved.

The chain or pulley may be plastically deformed by the load applied when the occupant is restrained, thereby immobilizing the chain. According to this configuration, the curved shape of the restraint unit can be maintained when the occupant is restrained, and the knees, and the like of the occupant can be appropriately restrained.

The one or more restraint units may be provided in plurality, and the restraint units may be provided in pairs so as to be disposed on both sides in the width direction of the seat cushion part.

Even with the configuration described above, in the event of an emergency, a pair of restraint units curve and protrude forward of the seat cushion part, so that these restraint units can be used to efficiently restrain the occupant's knees from the front, preventing the knees and the like from moving forward.

### EFFECT OF INVENTION

According to the present invention, a vehicle occupant protection device capable of efficiently restraining an occupant can be provided.

### BRIEF DESCRIPTION OF THE DRAWINGS

FIG. 1 is a diagram depicting a vehicle occupant protection device according to Embodiment 1 of the present invention;
FIG. 2 is a diagram depicting a state in which the protection device of FIG. 1(b) is further operated;
FIG. 3 is an exploded view of the protection device of FIG. 1(a);
FIG. 4 is a diagram depicting a process in which the restraint unit in FIG. 3 is operated;
FIG. 5 is a diagram depicting the process of dynamic deformation of the restraint unit of FIG. 4(b);
FIG. 6 is a diagram depicting the vicinity of the motor and gear in FIG. 5(a);
FIG. 7 is a diagram depicting a modified example of the restraint unit of FIG. 2(b);
FIG. 8 is a diagram depicting a modified example of the impact absorbing mechanism of FIG. 2(b);
FIG. 9 is a diagram depicting a modified example of the restraint unit of FIG. 6;
FIG. 10 is a diagram depicting a vehicle occupant protection device according to Embodiment 2 of the present invention;
FIG. 11 is an exploded view of the protection device of FIG. 10(a);
FIG. 12 is a diagram depicting the guide rail and slide block of FIG. 11;
FIG. 13 is a diagram of the seat side panel of FIG. 11 as viewed from the inside of the seat cushion part;
FIG. 14 is a diagram depicting the process for operating the restraint unit in FIG. 11;
FIG. 15 is a diagram depicting an example of a process of bending the restraint unit of FIG. 14(b);
FIG. 16 is a diagram depicting the characteristics of the chain of FIG. 15(a);
FIG. 17 is a diagram depicting a modified example of the pulley in FIG. 14(a);
FIG. 18 is a diagram depicting a modified example of the actuator of FIG. 13;
FIG. 19 is a diagram depicting a modified example of the restraint unit of FIG. 14;
FIG. 20 is a diagram depicting a modified example of the vehicle occupant protection device of FIG. 13; and
FIG. 21 is a diagram depicting a modified example of the restraint unit of FIG. 15.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

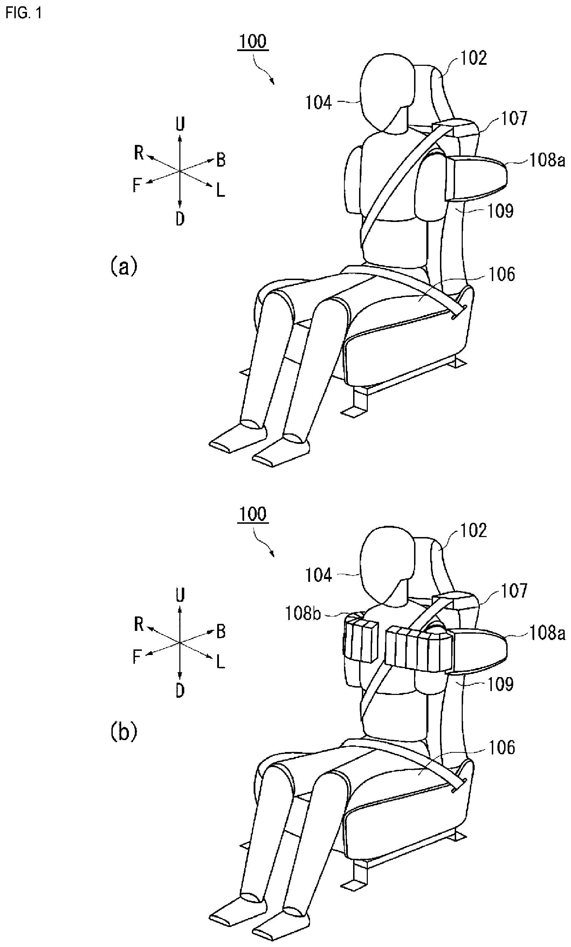

FIG. 1 is a diagram depicting a vehicle occupant protection device (hereinafter, referred to as protection device 100) according to Embodiment 1 of the present invention. FIG. 1(a) is a diagram depicting a state of a protection device 100 before operation.

In the present embodiment, when an occupant 104 is sitting in a seat 102 with a regular posture, the direction the occupant 104 is facing is defined as forward, the opposite direction is backward, the right hand side of the occupant 104 is the right direction and the left hand side of the occupant 104 is the left direction. Furthermore, when the occupant 104 is seated in a regular posture, the direction towards the head of the occupant 104 is referred to as up, and the direction towards the legs of the occupant 104 is referred to as down. In the drawings used in the description below, as necessary, the front, back, left, right, up, and down directions with reference to the occupant 104 in a regular position described above are indicated by arrows F (Forward), B (Back), L (Left), R (Right), U (up), and D (down).

The seat 102 has a seat cushion 106 part that supports the buttocks of the occupant 104, and a seat back part 107 that supports the back of the occupant 104. Of these, the protection device 100 of the present embodiment is mounted in the vicinity of the shoulders of the occupant 104 in a peripheral portion 109 of the seat back part 107 of the seat 102. The protection device 100 can be installed in any seat in the front row, back row, or even on either the left or right side of the vehicle.

FIG. 1(b) is a diagram depicting the protective device 100 of FIG. 1(a) in operation. The protection device 100 includes a plurality of restraint units 108a, 108b. In this embodiment, a pair of restraint units 108a, 108b are provided symmetrically on the left and right sides of the peripheral portion 109 of the seat back part 107 on both sides in the width direction. The restraint unit 108a is disposed at a left side of the peripheral portion 109 of the seat back part 107, and the restraint unit 108b is disposed at a right side of the peripheral portion 109 of the seat back part 107.

In the event of a vehicle emergency, the protection device 100 has restraint units 108a, 108b that protrude forward from the left and right peripheral portions of the seat back part 107 and extend in a curved manner around the front of the occupant 104, restraining the upper body of the occupant 104 near the shoulders from the front. The protection device 100 thereby prevents the occupant 104 from moving forward out of the seat 102.

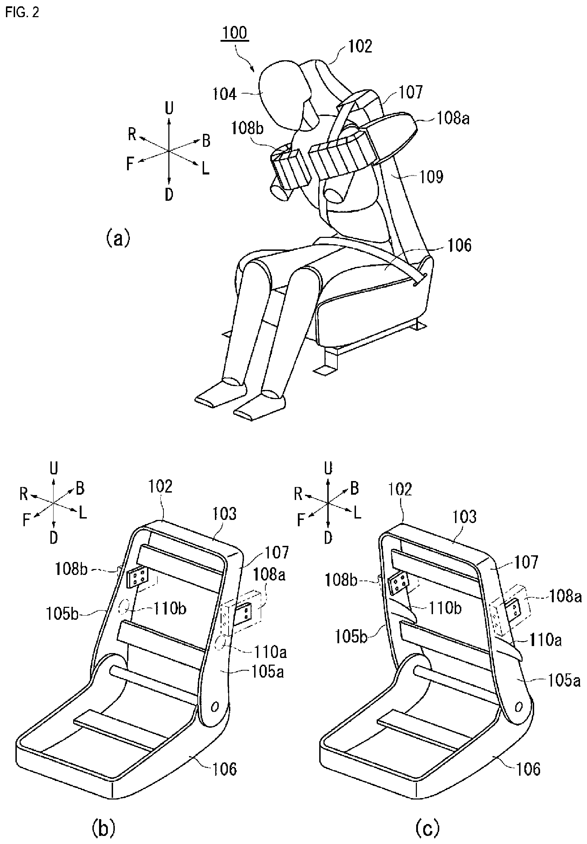

FIG. 2 is a diagram depicting a state in which the protection device 100 of FIG. 1(b) is further operated; FIG. 2(a) illustrates an example of a state in which the seat 102 in FIG. 1(b) is operated.

The protection device 100 includes an impact absorbing mechanism (weakened parts 110a, 110b in FIG. 2(b)) in addition to the restraint units 108a, 108b. The impact absorbing mechanism absorbs the impact generated when the restraint units 108a, 108b restrain the occupant 104, thereby preventing a rebound phenomenon in which the occupant 104 bounces back when restrained.

FIG. 2(b) is a diagram depicting the seat 102 of FIG. 1(b). In FIG. 2(b), the cover and seat pad (e.g., urethane material) of the seat 102 are omitted, and only the seat frame 103 is depicted. The seat frame 103 is a skeletal structure member equipped in the seatback 107.

In the present embodiment, the seat frame 103 has left and right side frames 105a, 105b each provided with weakened parts 110a, 110b. The side frames 105a, 105b are portions of the seat frame 103 that extend along the left and right side surfaces of the seat back part 107. The weakened parts 110a, 110b can be achieved by providing thin parts in the side frames 105a, 105b, by providing beads that induce deformation, or by providing notches or hollow parts in the side frames 105a, 105b.

FIG. 2(c) is a diagram depicting the seat 102 of FIG. 2(a). In the event of a vehicle emergency, the weakened parts 110a, 110b deform in conjunction with the dynamic deformation of the restraint units 108a, 108b (see FIG. 2(a)), allowing the seat back part 107 to operate so as to fold forward. This absorbs the impact when the restraint units 108a, 108b restrain the upper body of the occupant 104 from the front, and suppresses the rebound phenomenon of the occupant 104.

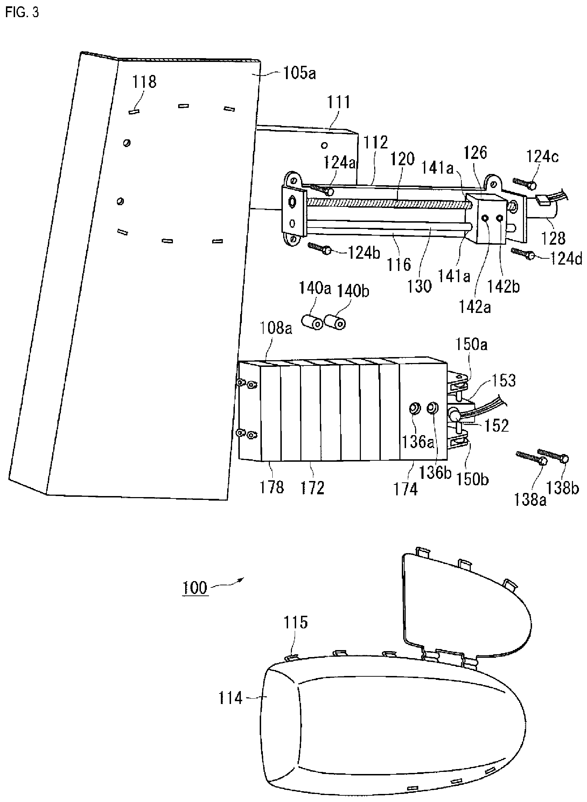

FIG. 3 is an exploded view of the protection device 100 of FIG. 1(a). The protection device 100 includes a slide unit 112 and a restraint unit 108a between a side frame 105a and a cover 114.

The slide unit 112 mainly includes a slide base 116, a slide shaft 120, a slide table 126, and a first motor 128.

The slide base 116 is a base part of the slide unit 112, and is attached to the side frame 105a by using bolts 124a to 124d. At this time, a support bracket 111 for assisting in mounting the slide base 116 is installed on the side frame 105a.

The slide shaft 120 is provided to extend in the front-to-back direction of the seat back part 107 (see FIG. 2(b)). The slide shaft 120 has a male screw provided on the outer periphery thereof and can be rotated by the motor 128. The slide base 116 is also provided with a thread-less shaft 130 parallel to the slide shaft 120.

The slide table 126 is slidably retained by the slide shaft 120 and the shaft 130, and has the restraint unit 108a attached thereto. The slide table 126 has through holes 141a, 141b through which the slide shaft 120 and the shaft 130 pass. Of these, a female thread that meshes with the male thread of the slide shaft 120 is provided on the inner periphery of the through hole 141a.

The motor 128 is provided on the rear end side of the slide base 116 and rotates the slide shaft 120 upon receiving a signal from the vehicle side.

Since the female thread of the through hole 141a is engaged with the male thread of the slide shaft 120, when the slide shaft 120 is rotated by the drive of the motor 128, the slide table 126 is moved forward along the male thread of the slide shaft 120. With this configuration, in the event of an emergency, the slide unit 112 is capable of moving the restraint unit 108a to the front of the seat back part 107 (see FIG. 1(b)) by driving the motor 128, thereby restraining the occupant 104.

The restraint unit 108a has a plurality of restraint blocks 172 connected in the front-to-back direction. The restraint unit 108a is connected to the bolt holes 136a, 136b of the rear end restraint block 174 using bolts 138a, 138b and to the bolt holes 142a, 142b of the slide table 126 via spacers 140a, 140b.

A second motor 152 is provided on the rear end side of the restraint unit 108a. The driving force of the second motor 152 is transmitted via the shaft 146 to a pair of gears 150a, 150b, which will be described later.

In order to make it possible to adjust the relative positional relationship between the restraint unit 108a and the occupant 104, a spacer or an adjuster mechanism can be installed between the slide base 116 and the side frame 105a.

The cover 114 is, for example, a resin member, and is attached to the side frame 105a, covering the restraint unit 108a, for example, by inserting a tab 115 provided on the edge into an insertion hole 118 in the side frame 105a.

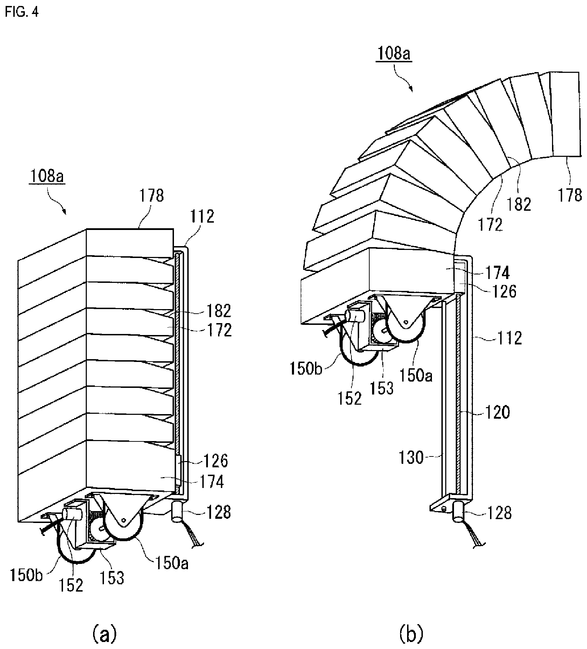

FIG. 4 is a diagram depicting the process in which the restraint unit 108a of FIG. 3 operates. FIG. 4(a) is a diagram depicting the restraint unit 108a of FIG. 3 in a state before operation.

As shown in FIG. 4(a), in the non-operation state, the restraint unit 108a is in a state in which the plurality of restraint blocks 172 are connected to be aligned in the front-to-back direction of the seat back part 107 (see FIG. 2(b)). The restraint block 172 is formed from a material having a certain degree of flexibility, and is capable of restraining the area around the shoulders of the occupant 104 (see FIG. 1(b)) without placing any burden on the occupant.

The restraint unit 108a is retained by the slide unit 112 described above. In addition, a motor 152, a gear box 153, and a pair of gears 150a, 150b are provided in a rear end restraint block 174 of the restraint unit 108a.

FIG. 4(b) is a diagram depicting a state in which the restraint unit 108a in FIG. 4(a) can be operated. When a collision or the like occurs with the vehicle, operation signals are sent respectively to the motor 128 of the slide unit 112 and the motor 152 of the restraint unit via various sensors and the controller.

As described with reference to FIG. 3, when the motor 128 rotates, the restraint unit 108a moves forward via the slide table 126. When the motor 152 rotates, the gears 150a, 150b rotate, and each of the restraint blocks 172 is dynamically deformed, so that the restraint unit 108a is overall dynamically deformed into a curved shape.

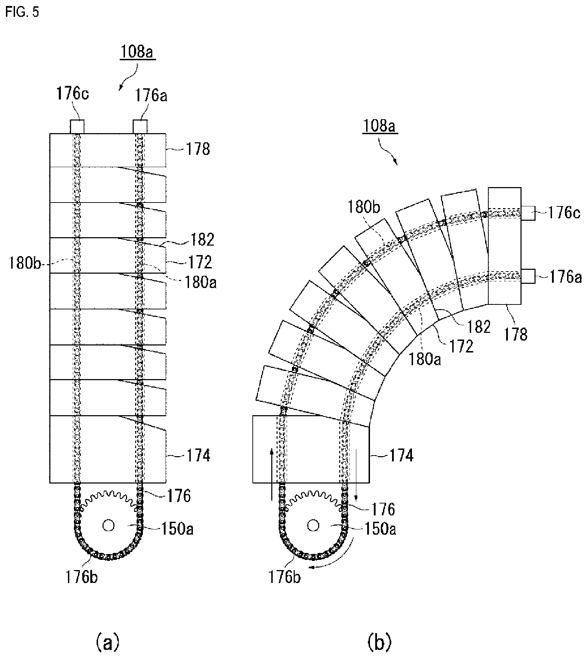

FIG. 5 is a diagram depicting the process of dynamic deformation of the restraint unit 108a of FIG. 4(b). FIG. 5(a) is a diagram depicting the internal structure of the restraint unit 108a, corresponding to FIG. 4(a). Since the gears 150a and 150b have the same configuration, the following description will be given by taking the gear 150a as a representative example.

A chain 176 is provided inside the restraint unit 108a and connects each restraint block 172. A first end 176a of the chain 176 is attached to the front end restraint block 178, and a middle portion 176b is exposed from a rear end restraint block 174, wound around the gear 150a, folded back, and then passes through each restraint block 172 again, with a second end 176c being attached to the front end restraint block 178.

Each restraint block 172 is provided with two rows of through holes 180a, 180b through which the chain 176 passes. Each of the restraint blocks 172 is provided with a tapered portion 182 on the seat back part 107 side (the right side in FIG. 5(a)). At this time, the through-holes 180a pass through the tapered portions 182 of the respective restraint blocks 172, and the through-holes 180b pass through the opposite side of the respective restraint blocks 172 to the tapered portions 182.

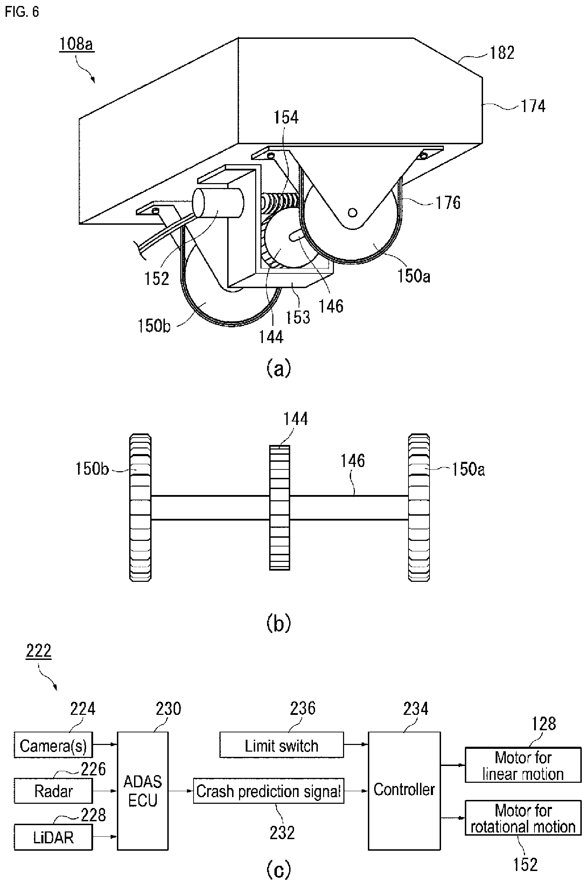

A chain 176 is engaged with the gear 150a. This gear 150a is connected to a motor 152 (see FIG. 6(a)) by a shaft 146, and rotates in conjunction with the motor 152. Therefore, when the motor 152 is driven, the gear 150a rotates, and the chain 176 is wound up through the through hole 180a and paid out towards the through hole 180b.

FIG. 5(b) is a diagram depicting a state in which the restraint unit 108a in FIG. 5(a) is dynamically deformed. As described above, the through hole 180a passes through the tapered portion 182 of the restraint block 172. Therefore, when the gear 150a rotates and the chain 176 in the through hole 180a is wound and pulled rearward, each of the multiple restraint blocks 172 tilts toward the tapered portion 182. As a result, the entire restraint unit 108a is curved toward the seat back part 107 (to the right in FIG. 5(b)).

FIG. 6 is a diagram depicting the vicinity of the motor 152 and the gears 150a and 150b in FIG. 5(a). FIG. 6(a) is an enlarged view depicting the motor 152 and the gears 150a and 150b in FIG. 5(a).

The motor 152 is connected to the gear box 153. The gear box 153 has a geared shaft 154 and a pinion gear 144 provided therein, and transforms the rotational force of the motor 152 into an orthogonal direction.

FIG. 6(b) is a diagram depicting the pinion gear 144 and gears 150a and 150b of FIG. 6(a). The pinion gear 144 is connected to gears 150a and 150b by a shaft 146, and transmits the rotational force of the motor 152 (see FIG. 6(a)) to the gears 150a and 150b. As the pinion gear 144 rotates, the gears 150a and 150b retract the chain 176.

FIG. 6(c) is a schematic diagram of the protection device 100 that employs the motor 152 of FIG. 6(a). In addition to the restraint unit 108a described above, the protection device 100 uses a camera 224, a radar 226, a lidar 228, and an ECU 230 (Electronic Control Unit), which is an electronic control device.

The ECU 230 is capable of implementing so-called Advanced Driver-Assistance Systems (ADAS). The ECU 230 can detect or predict contact with an object through image analysis using the camera 224, measurement using radio waves from the radar 226, and measurement using laser light from the lidar 228, and sends a collision prediction signal 232 to the controller 234.

When the controller 234 receives the collision prediction signal, the controller sends a drive signal to each of the motors 128 and 152. Furthermore, the sliding unit 112 (see FIG. 4(b)) is operated by the operation of the motor 128, and the restraint unit 108a slides forward. Furthermore, the restraint unit 108a (see FIG. 5(b)) is bent forward of the occupant by operation of the motor 152.

With the protection device 100, for example, a limit switch 236 can be provided at a prescribed location of the seat back part 107 (see FIG. 1(a)). The limit switch 236 is connected to the controller 234 and can stop the motor 152 in response to a user's operation, thereby releasing the restraint by the restraint unit 108a.

In this manner, with the protection device 100, by placing the motors 128, 152 under the control of the ECU 230, a system in which the restraint unit 108a (see Figure 1 (b)) is operated either by predicting a collision before it occurs or in an extremely fast time range during the collision (for example, within 20 ms after the collision) can be configured.

As described above, according to the protection device 100 of the present embodiment, in the event of an emergency, the restraint units 108a, 108b (see FIG. 1 (b)) protrude forward of the seat back part 107 and curve, thereby dynamically deforming so as to wrap around in front of the occupant. This enables restraining the upper body of the occupant 104 and prevents the occupant 104 from moving forward. In particular, the protection device 100 is configured to be added to the peripheral portion 109 of the seat back part 107 and can be integrated with the seat 102, so that the relative distance between the restraint units 108a, 108b and the upper body of the occupant 104 is not affected by the position of the seat 102 within the vehicle cabin. Therefore, the protection device 100 can provide stable occupant restraint performance regardless of the position of the seat 102.

In addition to the restraint units 108a, 108b, the protection device 100 includes an impact absorbing mechanism (weakened parts 110a, 110b in FIG. 2(b)) that absorbs impact to the seat 102. This impact absorbing mechanism enables moving the seat back part 107 forward in conjunction with the dynamic deformation of the restraint units 108a, 108b in the event of a vehicle emergency.

According to the configuration described above, when the restraint units 108a, 108b restrain the upper body of the occupant 104 from the front, the seat back part 107 is operated to tilt forward due to deformation of the weakened parts 110a, 110b, thereby absorbing the kinetic energy when the occupant is restrained, suppressing the rebound phenomenon, and further reducing the injury level of the occupant 104. The protection device 100 is capable of efficiently restraining the occupant 104 by including the restraint units 108a, 108b and the weakened parts 110a, 110b serving as an impact absorbing mechanism.

In the present embodiment, the chain 176 (see FIG. 5(b)) may be made of a material or have a shape that undergoes plastic deformation when a certain amount of load is applied from the occupant 104 (see FIG. 1(b)), for example. For example, the chain 176 may have characteristics that enable plastic deformation in a load area near the shoulders of the occupant 104 input when the occupant 104 is restrained, and where permanent deformation remains after the load is removed. Such a chain 176 can exhibit the characteristic of being plastically deformed at the through hole 180a on the side of the tapered portion 182 in FIG. 5(b), for example, and becoming immovable within the through hole 180a.

In addition, the restraint units 108a, 108b may be configured to plastically deform together with the chain 176, thereby further reducing the load that may be applied to the occupant 104. For example, a load is transmitted from the restraint units 108a, 108b to the shoulder area, but by making the restraint units 108a, 108b plastically deformable, an upper limit can be set on the load that can be applied to the occupant 104, and by ensuring that the load does not exceed the injury resistance value of the shoulder area or the like, the risk of injury to the occupant 104 can be avoided.

### (Modified Example)

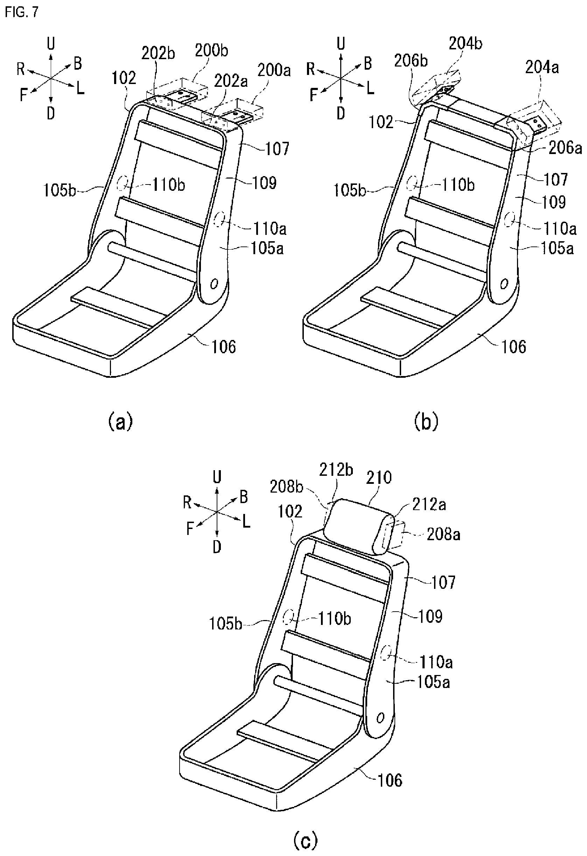

FIG. 7 is a diagram depicting a modified example of the restraint units 108a, 108b of FIG. 2(b). In the description below, the same code will be provided for configuration elements that have already been described and the description thereof is omitted. In addition, configuration elements with the same name as configuration elements already described have the same configuration and function even if a different reference is applied.

Restraining units 200a, 200b in FIG. 7(a) are provided as a pair on the left and right shoulder portions 202a, 202b of the peripheral portion 109 of the seat back part 107. The restraint units 200a, 200b are dynamically deformable while curving from above relative to the shoulders of the occupant 104 (see FIG. 1(a)), and can restrain the areas near both shoulders. The upper body of the occupant 104 can also be efficiently restrained by the restraint units 200a, 200b.

The restraint units 204a, 204b in FIG. 7(b) are provided as a pair at corners 206a, 206b in the left and right shoulder portions of the peripheral portion 109 of the seat back part 107. The restraint units 204a, 204b are dynamically deformable while curving obliquely upward with respect to the shoulders of the occupant 104 (see FIG. 1(a)), and can restrain the areas near both shoulders. The upper body of the occupant 104 can also be efficiently restrained by the restraint units 204a, 204b.

The restraint units 208a, 208b in FIG. 7C are provided as a pair on the left and right peripheral portions 212a, 212b of the headrest 210 of the seat back part 107. The restraint units 208a, 208b are dynamically deformable so as to extend while curving from the left and right sides relative to the head of the occupant 104 (see FIG. 1(a)), and can restrain the head from the front. The restraint units 208a, 208b can efficiently restrain the head of the occupant 104.

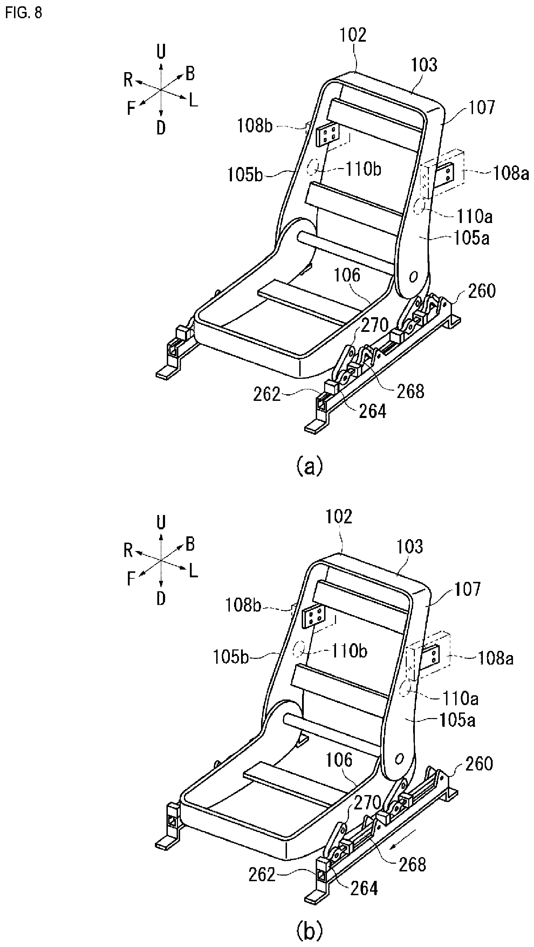

FIG. 8 is a diagram depicting a modified example of the impact absorbing mechanism of FIG. 2(b). FIG. 8(a) is a diagram depicting the impact absorbing mechanism before operation.

The impact absorbing mechanism is achieved as a seat slider unit 260 that is provided on the floor of the vehicle and supports the seat cushion part 106. In the event of a vehicle emergency, the seat slider unit 260 slides the seat cushion part 106 forward in conjunction with the dynamic deformation of the restraint units 108a, 108a, and absorbs the impact when the restraint units 108a, 108b restrain the occupant.

The seat slider unit 260 includes a rail-shaped seat slider 262 installed on the floor, a guide bracket 264 slidably held on the seat slider 262, and an absorber bar 268 extending between the seat slider 262 and the guide bracket 264. A pair of absorber bars 268 are provided at the front and rear.

The absorber bar 268 is made of an elastic body, and is normally installed in a compressed state between the guide bracket 264 and the seat slider 262. The absorber bar 268 is connected to the seat cushion part 106 via a seat adjuster 270.

FIG. 8(b) is a diagram depicting a state in which the absorber bar 268 in FIG. 8(a) is released. In the event of a vehicle emergency, the guide bracket 264 is unlocked in conjunction with the dynamic deformation of the restraint units 108a, 108b, thereby releasing the absorber bar 268 from the compressed state thereof and enabling the seat back part 107 to move forward via the seat adjuster 270.

The seat slider unit 260 also absorbs the impact when the restraint units 108a, 108b, and the like restrain the upper body and head of the occupant 104 from the front, and can suppress the rebound phenomenon of the occupant 104. By providing the protection device 100 with a seat slider unit 260 in place of the weakened parts 110a, 110b, or by providing the seat slider unit 260 together with the weakened parts 110a, 110b, the protection device 100 is able to absorb the kinetic energy generated when the occupant is restrained, suppress the rebound phenomenon, further reduce the injury level of the occupant 104, and efficiently restrain the occupant 104.

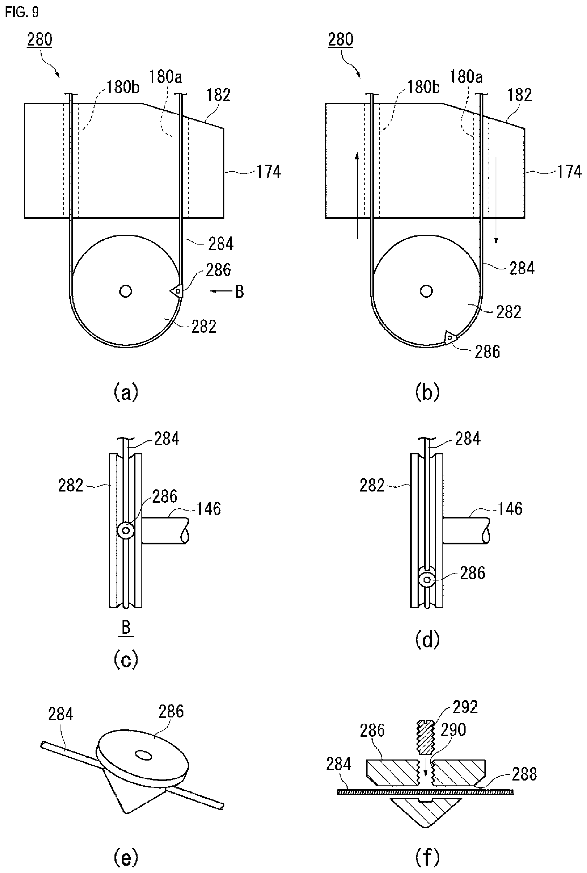

FIG. 9 depicts a modified example (restraint unit 280) of the restraint unit 108 of FIG. 6. FIG. 9(a) is a diagram depicting the restraint unit 280 corresponding to FIG. 6(a). The restraint unit 280 differs in configuration from the restraint unit 108 by including a pulley 282 and a wire 284 instead of the gear 150a and the chain 176 of FIG. 6(a).

Similar to the chain 176 (see FIG. 6(a)), the wire 284 passes through the through holes 180a, 180b and passes through the restraint blocks 174, and the like, with a first end and a second end secured to the front end restraint block 178, and the middle portion exposed from the rear end restraint block 174 and wound around the pulley 282.

FIG. 9(b) is a diagram depicting the restraint unit 280 corresponding to FIG. 6(b). Since the through hole 180a passes through the tapered portion 182 of the restraint block 174 and the like, when the pulley 282 rotates and the wire 284 in the through hole 180a is wound and pulled rearward, each restraint block tilts toward the tapered portion 182. As a result, the entire restraint unit 280 is bent toward the seat cushion part 106 (see FIG. 1(b)).

FIG. 9(c) is a diagram of the pulley 282 in FIG. 9(a). The wire 284 is secured to the pulley 282 using a wedge 286.

FIG. 9(d) is a diagram depicting a state in which the pulley 282 in FIG. 9(c) has rotated. The wire 284 is secured to the pulley 282 by a wedge 286, so that when the pulley 282 rotates, the wire 284 is pulled out from the through hole 180a of the restraint block 174 (see FIG. 9(b)).

FIG. 9(e) is a perspective view of the wedge 286 of FIG. 9(a). The wedge 286 is conical in shape and has the wire 284 passing therethrough perpendicular to the axis thereof.

FIG. 9(f) is a cross-sectional view of the wedge 286 of FIG. 9(e). The wedge 286 can be secured onto the wire 284 by passing the wire 284 through a through hole 288 and fastening a set screw 292 in a central screw hole 290.

In this manner, by utilizing the pulley 282 and the wire 284, each restraint block 172 can be tilted (see FIG. 6(b)) toward the seat cushion part 106 (see FIG. 1(b)) by pulling the wire 284 rearward, and the restraint unit 280 can be deformed into a curved shape extending from the side of the seat cushion part 106 to the front.

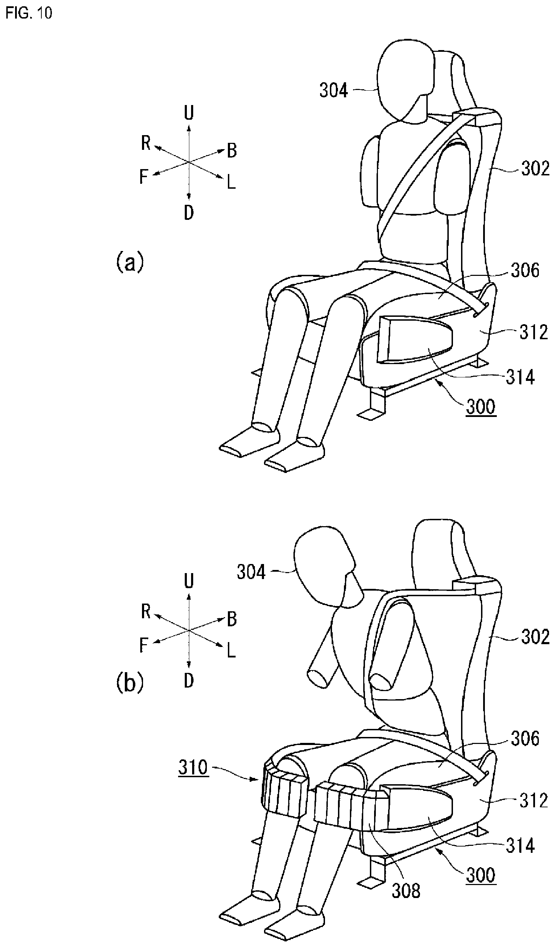

FIG. 10 is a diagram depicting a vehicle occupant protection device (hereinafter, protection device 300) according to Embodiment 2 of the present invention. FIG. 10(a) is a diagram depicting a state before the protection device 300 is operated.

In the present embodiment, when an occupant 304 is sitting in a seat 302 with a regular posture, the direction the occupant 304 is facing is defined as forward, the opposite direction is backward, the right hand side of the occupant 304 is the right direction and the left hand side of the occupant 304 is the left direction. Furthermore, when the occupant 304 is seated in a regular orientation, the direction towards the head of the occupant 304 is referred to as up, and the direction towards the legs of the occupant 304 is referred to as down. In the drawings used in the description below, as necessary, the front, back, left, right, up, and down directions with reference to the occupant 304 in a regular position described above are indicated by arrows F (Forward), B (Back), L (Left), R (Right), U (up), and D (down).

The seat 302 has a seat cushion part 306 that supports the buttocks of the occupant 304, and a seat back part 307 that supports the back of the occupant 304. Of these, the protection device 300 of the present embodiment is mounted on a side part of the seat cushion part 306 of the seat 302. The protection device 300 can be installed in any seat in the front row, rear row, or even on either the left or right side of the vehicle.

FIG. 10(b) is a diagram depicting a state in which the protection device 300 in FIG. 10(a) is in operation. In the event of a vehicle emergency, the protection device 300 has a restraint unit 308 that curves and protrudes so as to wrap around the front of the seat cushion part 306, and restrains the vicinity of the knees of the occupant 304 from the front. In FIG. 10(b), in addition to the protection device 300 provided on the left side of the seat cushion part 306, another protection device 310 is provided on the right side of the seat cushion part 306.

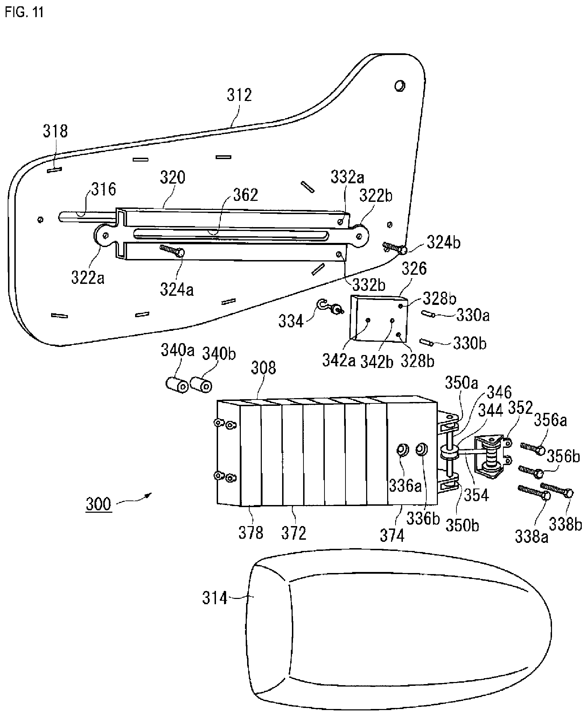

FIG. 11 is an exploded view of the protection device 300 of FIG. 10(a). The protection device 300 includes a restraint unit 308 between a seat side panel 312 and a cover 314.

The seat side panel 312 is a plate-shaped member, and is disposed on the side of the seat cushion part 306 (see FIG. 10(a)). The seat side panel 312 is provided with a slit 316 extending in the front-to-back direction and a plurality of insertion holes 318 into which the tabs of the cover 314 are inserted.

A guide rail 320 is a guide member that slidably retains the restraint unit 308, and is installed on the outer side of the seat side panel 312 so as to extend in the front-to-back direction of the seat 302 (see FIG. 10(a)). The guide rail 320 is secured to the seat side panel 312 using bolts 324a, 324b at connection parts 322a, 322b at both ends.

A slide block 326 is a member to which the restraint unit 308 is connected, and that is slidably attached to the guide rail 320. The slide block 326 is temporarily fixed to the rear end side of the guide rail 320 by using shear pins 330a, 330b in two pin holes 328a, 328b and inserting these shear pins 330a, 330b into two pin holes 332a, 332b on the rear end side of the guide rail 320.

A hook 334 is connected to the inside of the slide block 326 by fastening or the like. The hook 334 passes through a slit 362 of the guide rail 320 and a slit 316 of the seat side panel 312, and is disposed in a state of protruding from the seat side panel 312 into the seat cushion part 306 (see FIG. 10(a)).

The restraint unit 308 has a plurality of restraint blocks 372 connected in the front-to-back direction. The restraint unit 308 is connected to the bolt holes 336a, 336b of a rear end restraint block 374 using bolts 338a, 338b and to the bolt holes 342a, 342b of the slide block 326 via spacers 340a, 340b.

A pulley 344 is provided on the rear end side of the restraint unit 308. The pulley 344 is a rotating member and is connected to a pair of gears 350a, 350b via a shaft 346. A first end of a pulley wire 354 extending from a spool 352 is connected to the pulley 344.

The spool 352 is a member that winds up and houses a second end of the pulley wire 354, and is secured to the rear of the restraint unit 308 on the outside of the seat side panel 312 by bolts 356a, 356b.

The cover 314 is, for example, a resin member, and is attached to the seat side panel 312 while covering the restraint unit 308 by inserting tabs (not shown) into insertion holes 318 in the seat side panel 312.

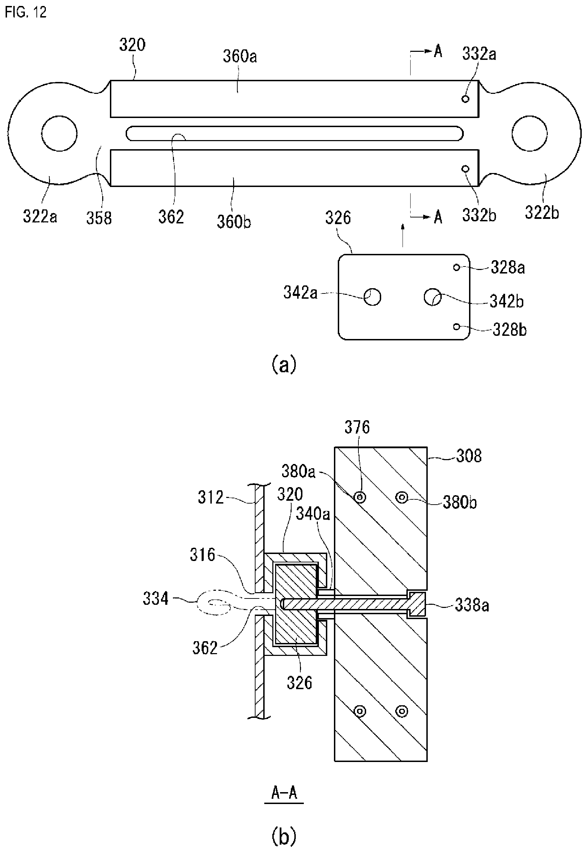

FIG. 12 is a diagram depicting the guide rail 320 and the slide block 326 of FIG. 11. FIG. 12(a) is a side view of the guide rail 320 and the slide block 326 in FIG. 11.

The guide rail 320 has a configuration in which the upper and lower edges of a long base part 358 are bent to form gripping parts 360a, 360b. A slit 362 is formed along the longitudinal direction of the base part 358 between the gripping parts 360a. The hook 334 (see FIG. 12(b)) of the slide block 326 is inserted into the slit 362.

The slide block 326 is inserted between the base part 358 of the guide rail 320 and the gripping parts 360a, 360b, and is temporarily fixed to the rear end side of the guide rail 320 by the shear pins 330a, 330b described above (see FIG. 11). For the slide block 326, bolt holes 342a, 342b, to which the restraint unit 308 (see FIG. 11) is secured, are provided in an area exposed through the gripping parts 360a, 360b of the guide rail 320.

FIG. 12(b) is a cross-sectional diagram of the restraint unit 308 corresponding to the A-A cross section of the guide rail 320 in FIG. 12(a).

The restraint unit 308 is connected to the slide block 326 using a bolt 338a and is slidably attached to the guide rail 320 via the slide block 326. The hook 334 described above passes through the slits 362 and 316 from the slide block 326 and protrudes to the inside of the seat side panel 312.

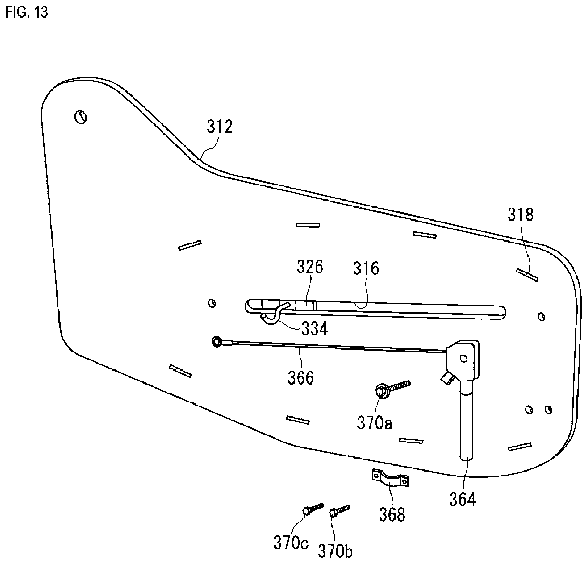

FIG. 13 is a diagram of the seat side panel 312 in FIG. 11 as viewed from the inside of the seat cushion part 306 (see FIG. 10(a)).

An actuator 364 is provided on the inner side of the seat side panel 312. The actuator 364 is a power source that moves the restraint unit 308 in an emergency, and is connected to the hook 334 of the slide block 326 by a wire 366. The actuator 364 is mounted to the seat side panel 312 using a bracket 368 and bolts 370a-370c.

In the present embodiment, as an example, a so-called pyrotechnic actuator 364 that utilizes a combustible agent is adopted. When the actuator 364 receives a moving signal from a prescribed controller, the actuator uses the power of combustion to quickly retract the wire 366 and move the restraint unit 308 (see FIG. 11) to the front side of the seat 302 via the hook 334.

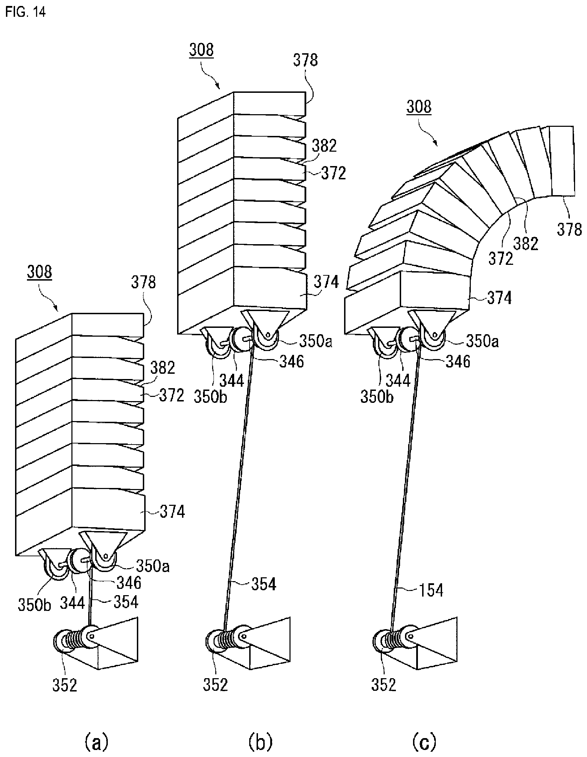

FIG. 14 is a diagram depicting a process in which the restraint unit 308 in FIG. 11 is dynamically deformed. FIG. 14(a) is a diagram depicting the restraint unit 308 in FIG. 11 in a state before operation.

As depicted in FIG. 14(a), the restraint unit 308 is formed by connecting a plurality of restraint blocks 372 together. The restraint block 372 is formed from a material having a certain degree of flexibility, and is capable of restraining the area around the knees of the occupant 304 (see FIG. 10(b)) without placing any burden on him/her.

A pulley 344 and a pair of gears 350a, 350b are provided on a rear end restraint block 374. A pulley wire 354 extending from a spool 352 is connected to the pulley 344.

FIG. 14(b) is a diagram depicting an example of the restraint unit 308 in FIG. 14(a) during operation. When the actuator 364 (see FIG. 13) operates and the wire 366 is retracted, the restraint unit 308 moves to the front of the seat 302 (see FIG. 10(b)), and the rear pulley wire 354 is accordingly paid out from the spool 352. When the restraint unit 308 moves forward beyond a certain point, the pulley wire 354 within the spool 352 is used up.

FIG. 14(c) is a diagram depicting a state in which the restraint unit 308 in FIG. 14(b) has completed operation. When there is no more pulley wire 354 in the spool 352, the tension in the pulley wire 354 increases, causing the pulley 344 to rotate. This causes the pulley 344 and the gears 350a, 350b connected by the shaft 346 to rotate, causing dynamic deformation of the restraint unit 308.

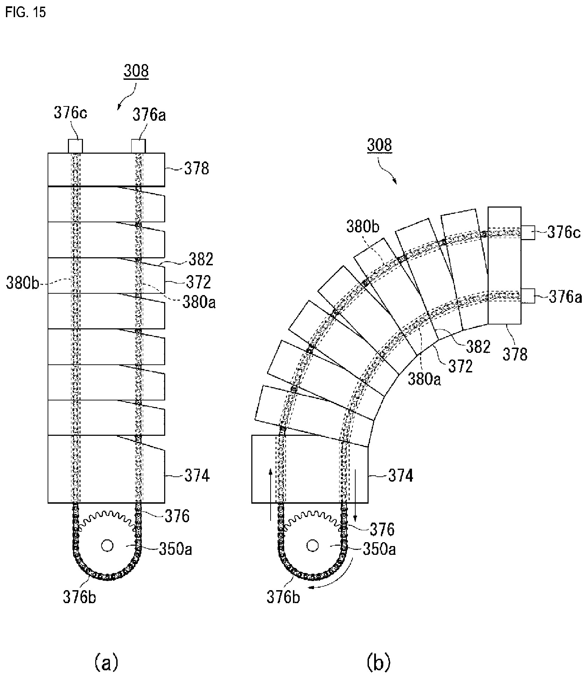

FIG. 15 is a diagram depicting the process of dynamic deformation of the restraint unit 308 in FIG. 14. FIG. 15(a) is a diagram depicting the internal structure of the restraint unit 308, corresponding to FIG. 14(b). Since the gears 350a and 350b have the same configuration, the following description will be given by taking the gear 350a as a representative example.

A chain 376 is provided inside the restraint unit 308 and passes through each of the restraint blocks 372. The first end 376a of the chain 376 is attached to a front-end restraint block 378, and a middle portion 376b is exposed through the rear-end restraint block 374, wound around the gear 350a, folded back, and then passes through each restraint block 372 again, with a second end 376c being attached to the front-end restraint block 378.

Each restraint block 372 is provided with two rows of through holes 380a, 380b through which the chain 376 passes. Each of the restraint blocks 372 is provided with a tapered portion 382 on the seat cushion part 306 side (the right side in FIG. 15(a)). Here, the through hole 380a passes through the tapered portion 382 of the respective restraint blocks 372, and the through hole 380b passes through the opposite side of the respective restraint blocks 372 to the tapered portion 382.

A chain 376 is engaged with the gear 350a. This gear 350a is connected to the pulley 344 by the shaft 346, and rotates in conjunction with the pulley 344. Therefore, when the pulley 344 is rotated by being pulled by the pulley wire 354 (see FIG. 14(c)), the gear 350a rotates, and the chain 376 is wound up through the through hole 380a and paid out towards the through hole 380b.

FIG. 15(b) is a diagram depicting a state in which the restraint unit 308 in FIG. 15(a) is dynamically deformed. As described above, the through hole 380a passes through the tapered portion 382 of the restraint block 372. Therefore, when the gear 350a rotates and the chain 376 is wound and pulled rearward through the through hole 380a, each of the plurality of restraint blocks 372 tilts toward the tapered portion 382. As a result, the entire restraint unit 308 is curved toward the seat cushion part 306 (to the right in FIG. 15(b)).

In this manner, when the actuator 364 (see FIG. 13) operates and the restraint unit 308 (see FIG. 14) moves forward, the tension in the pulley wire 354 causes the pulley 344 and gears 350a, 350b to rotate, and the chain 376 is wound up and pulled rearward, causing each restraint block 372 to tilt toward the seat cushion part 306. As a result, the restraint unit 308 extends forward from the seat cushion part 306 (see FIG. 10(b)) and dynamically deforms so as to bend inward in the width direction of the seat cushion part 306, thereby restraining the vicinity of the knees of the occupant 304 from the front.

With the configuration described above, in the event of an emergency, the restraint unit 308 (see FIG. 10(b)) curves and protrudes to the front of the seat cushion part 306, and this restraint unit 308 is utilized to efficiently restrain the area around the knees of the occupant 304 from the front, thereby efficiently absorbing the load from the occupant via the kneecap, femur, and completely preventing the occupant from moving forward. In particular, the protection device 300 is configured to be added to the side of the seat cushion part 306 and can be integrated with the seat 302, so that the relative distance between the restraint unit 308 and the knee and the like is not affected by the position of the seat track. Therefore, the protection device 300 can exert a stable occupant restraint performance regardless of the position of the seat track, even when the seat track is located at the rearmost position, for example.

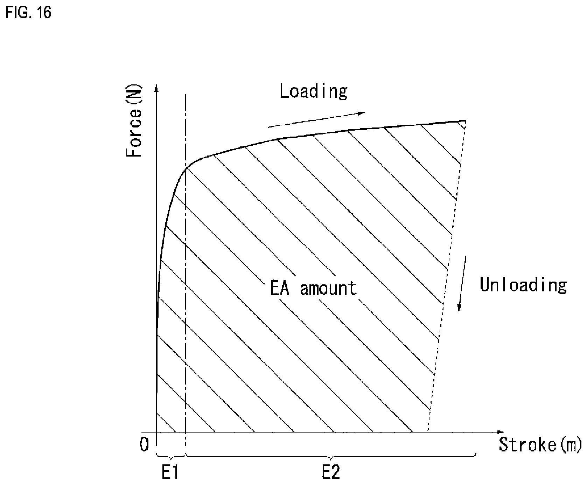

FIG. 16 is a diagram depicting the characteristics of the chain 376 of FIG. 15(a). The horizontal axis of FIG. 16 represents the movement amount (m) of the chain 376, and the vertical axis represents the force acting on the chain 376. The shaded portion represents the load absorption (energy absorption amount) of the restraint unit 308 (see FIG. 15(b)).

On the horizontal axis, the left side range E1 indicates the force applied to the chain 376 (see FIG. 15(b)) when the actuator 364 (see FIG. 13) operates, and the right side range E2 indicates the force applied to the chain 376 when the occupant 304 (see FIG. 10(b)) is restrained. The right arrow on the upper side of the graph indicates the flow of force when a load is applied, and the down arrow on the right side indicates the flow of force when the load is removed.

The chain 376 (see FIG. 15(b)) may be made of a material or have a shape that undergoes plastic deformation when a certain amount of load is applied from the occupant 304 (see FIG. 10(b)), for example. For example, the chain 376 may have characteristics that cause plastic deformation in a load area input when the occupant 304 is restrained near the knees, and that cause permanent deformation even when the load is removed. Such a chain 376 can exhibit the characteristic of being plastically deformed at the through hole 380a on the side of the tapered portion 382 in FIG. 15(b), for example, and becoming immovable within the through hole 380a.

In addition, the restraint unit 308 may be configured to plastically deform together with the chain 376, thereby further reducing the load that may be applied to the occupant 304. For example, the restraint unit 308 transmits load from the patella to the femur and then to the acetabulum (hip joint); by allowing the restraint unit 308 to plastically deform, an upper limit is placed on the load that can be applied to these areas, and the load does not exceed the biomechanical injury resistance value of these areas, thereby avoiding the risk of injury to the occupant 304.

In FIG. 16, if the chain 376 has the characteristics (see FIG. 15(b)) described above, when the load is removed as indicated by the down arrow on the right, the chain becomes immobile while maintaining a certain degree of stroke compared to before operation. That is, chain 376 having the above characteristics can prevent return toward the through hole 380a and maintain the curved shape of restraint unit 308. With this configuration, the curved shape of the restraint unit 308 is maintained even after receiving a load from the occupant 304, and the load absorption amount is maintained, so that the knees, and the like of the occupant 304 can be suitably restrained.

In the present embodiment, chain 376 (see FIG. 15(a)) is used, but the same function can be achieved by other configurations such as a wire or a winch.

### (Modified Example)

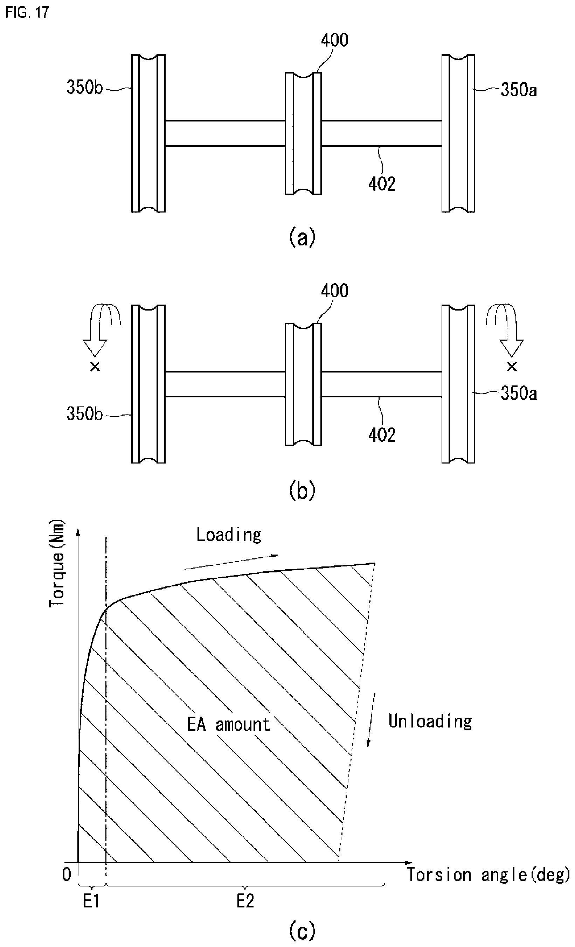

FIG. 17 is a diagram depicting a modified example (pulley 400) of the pulley 344 in FIG. 14(a). In the description below, the same code will be provided for configuration elements that have already been described and the description thereof is omitted. In addition, configuration elements with the same name as configuration elements already described have the same configuration and function even if a different reference is applied.

FIG. 17(a) is a diagram depicting a state of the pulley 400 before deformation. The pulley 400 can be made of a material that causes a shaft 402 to plastically deform when a certain amount of load is applied by the occupant, similar to the chain 376 described with reference to FIG. 16.

FIG. 17(b) is a diagram depicting the pulley 400 in a deformed state. When the restraint unit 308 restrains the knees of the occupant 304 (see FIG. 10(b)), a load is applied to the chain 376, which applies a force to the gear 350a causing rotation in the direction opposite to the bending motion of the restraint unit 308. The shaft 402 of the pulley 400 may have the property of being plastically deformed in the region of the load input at this time, becoming unable to rotate and preventing the chain 376 from returning.

FIG. 17(c) is a diagram depicting the characteristics of the pulley 400 in FIG. 17(a). The horizontal axis of FIG. 17(c) represents the torsion angle (degrees) of the shaft 402, and the vertical axis represents the torque (Nm) of the pulley 400. The shaded portion represents the load absorption (energy absorption amount) of the restraint unit 308.

On the horizontal axis, the left side range E1 indicates the torque applied to the pulley 400 when the actuator 364 operates, and the right side range E2 indicates the torque applied to the pulley 400 when the occupant is restrained. The right arrow on the upper side of the graph indicates the torque flow when a load is applied, and the down arrow on the right side indicates the torque flow when a load is removed.

With the pulley 400 having the characteristics described above, for example, when an occupant 304 (see FIG. 10 (b)) is restrained, the shaft 402 undergoes plastic deformation and becomes unable to rotate, thereby preventing reverse rotation of the gear 350a when the load is removed as indicated by the down arrow on the right, and preventing the chain 376 from rewinding. With this configuration, the curved shape of the restraint unit 308 is maintained even after receiving a load from the occupant 304, and the load absorption amount is maintained, so that the knees, and the like of the occupant 304 can be suitably restrained.

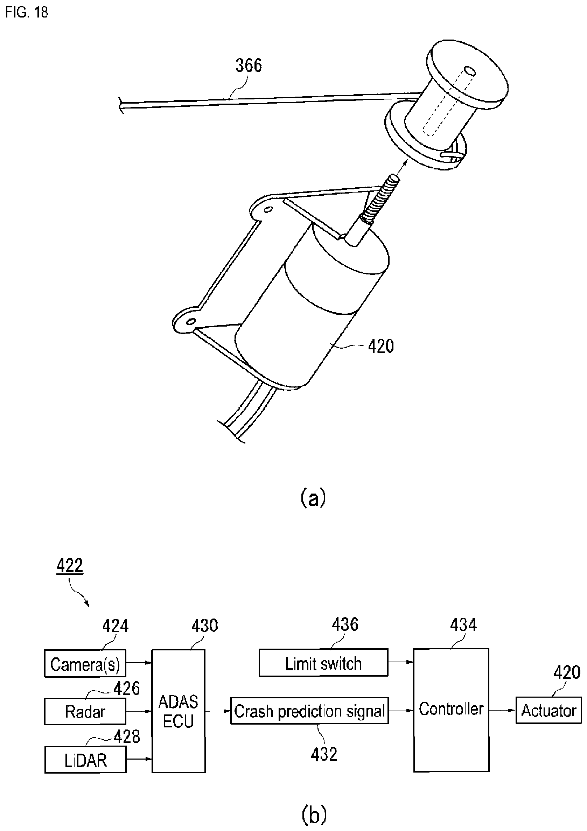

FIG. 18 is a diagram depicting a modified example (actuator 420) of the actuator 364 of FIG. 13. FIG. 18(a) is a perspective view depicting an actuator 420 of the modified example. While the actuator 364 in FIG. 13 has been described as being of the pyrotechnic type, the actuator 420 employs an electric type that utilizes a motor or the like.

FIG. 18(b) is a schematic diagram of a protection device 422 that employs the actuator 420 of FIG. 18(a). The protection device 422 uses, in addition to the restraint unit 308 described above, a camera 424, a radar 426, a lidar 428, and an ECU 430 (Electronic Control Unit), which is an electronic control device.

The ECU 430 is capable of implementing so-called Advanced Driver-Assistance Systems (ADAS). The ECU 430 can detect or predict contact with an object through image analysis using the camera 424, measurement using radio waves from the radar 426, and measurement using laser light from the lidar 428, and sends a collision prediction signal 432 to a controller 434.

When the controller 434 receives the collision prediction signal, the controller sends an operation signal to the actuator 420. Then, the actuator 420 operates, and the restraint unit 308 (see FIG. 10(b)) moves toward the front.

With the protection device 422, for example, a limit switch 436 can be provided at a prescribed position on the seat side panel 312 (see FIG. 11). The limit switch 436 is connected to the controller 434 and can stop the actuator 420 in response to a user's operation, thereby releasing the restraint by the restraint unit 308.

In this manner, when it is possible to predict a collision before the collision and operate the restraint unit 308 (see FIG. 10(b)), an electric actuator 420 that operates under the control of the ECU 430 can be employed. On the other hand, if the actuator is assumed to be operated after a collision, the pyrotechnic actuator 364 of FIG. 13 can be used. As described above, the actuator 420 employed in the protection device 422 can be appropriately selected from different types in consideration of the anticipated situation.

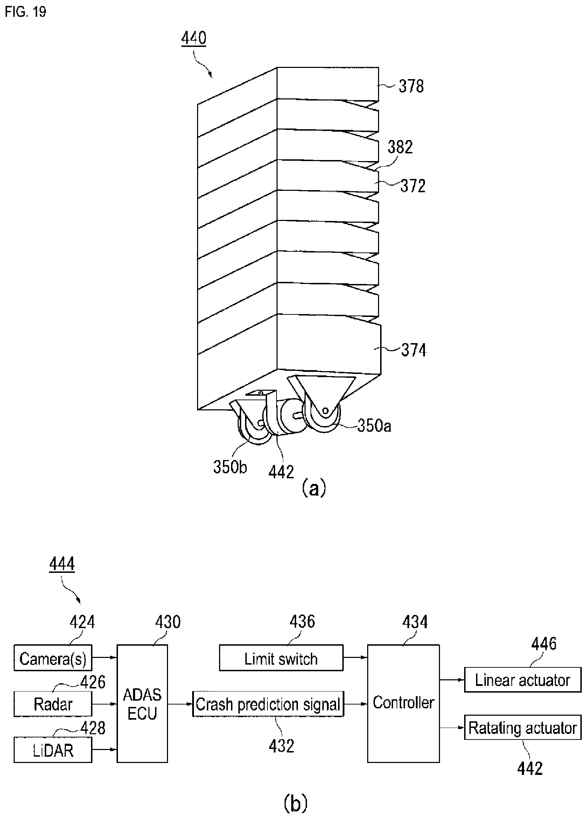

FIG. 19 depicts a modified example (restraint unit 440) of the restraint unit 308 of FIG. 14. FIG. 19(a) is a diagram depicting an outline of the restraint unit 440.

The restraint unit 440 includes a rotation actuator 442 as a source of motion for the bending motion, unlike the pulley 344 (see FIG. 14). The rotation actuator 442 has both shafts connected to the gear 350a and can operate in response to a prescribed signal to perform a bending operation of the restraint unit 440. As such a rotation actuator 442, a rotary solenoid, a motor, or the like can be adopted.

FIG. 19(b) is a schematic diagram of a protection device 444 employing the rotation actuator 442 of FIG. 19(a). In addition, with the protection device 444, a linear actuator 446 capable of linear movement can be adopted as another example of the guide rail 320 (see FIG. 11) and the actuator 364 (see FIG. 13).

When the controller 434 receives the collision prediction signal 432 from the ECU 430, the controller sends an operation signal to the linear actuator 446 and the rotation actuator 442. Thereby, operation of the linear actuator 446 causes the restraint unit 440 to move forward, and operation of the rotation actuator 442 causes the restraint unit 440 to bend.

In this manner, even with a configuration that employs the rotation actuator 442 and the linear actuator 446, in the event of an emergency, the restraint unit 440 curves and protrudes to the front of the seat cushion part 306, similar to the protective device 300 in FIG. 10 (b), and can efficiently restrain the area around the knees of the occupant 304 from the front and prevent the occupant from moving forward.

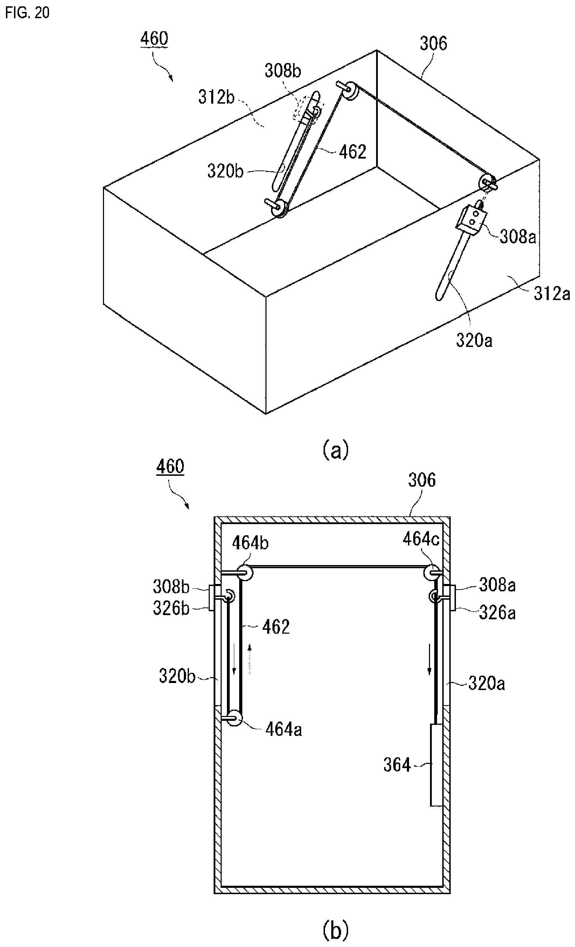

FIG. 20 is a diagram depicting a modified example (protection device 460) of the vehicle occupant protection device 300 of FIG. 13. FIG. 20(a) is a schematic diagram depicting an overview of the protection device 460. The protection device 460 includes seat side panels 312a, 312b, guide rails 320a, 320b, and a pair of restraint units 308a, 308b on each of the opposite sides of the seat cushion part 306.

FIG. 20(b) is a schematic diagram depicting the protection device 460 of FIG. 20(a) from above. The protection device 460 is capable of pulling each of the restraint units 308a, 308b on both sides forward using a single actuator 364.

For example, a first end of a wire 462 is connected to the right slide block 326b of the seat cushion part 306. The wire 462 extends forward from the slide block 326b, passes rearward via a pulley 464a, and is connected to the left slide block 326a of the seat cushion part 306 and the actuator 364 via a pulley 464b. With this configuration, when the actuator 364 is operated and pulls in the wire 462, the slide blocks 326a, 326b can each be moved forward.

With the configuration described above, the pair of restraint units 308a, 308b can be operated by a single actuator 364, and both legs of the occupant 304 (see FIG. 10(b)) can be efficiently restrained with a simpler configuration. In the protection device 460, the actuator 364 may be either a pyrotechnic type or an electrical type.

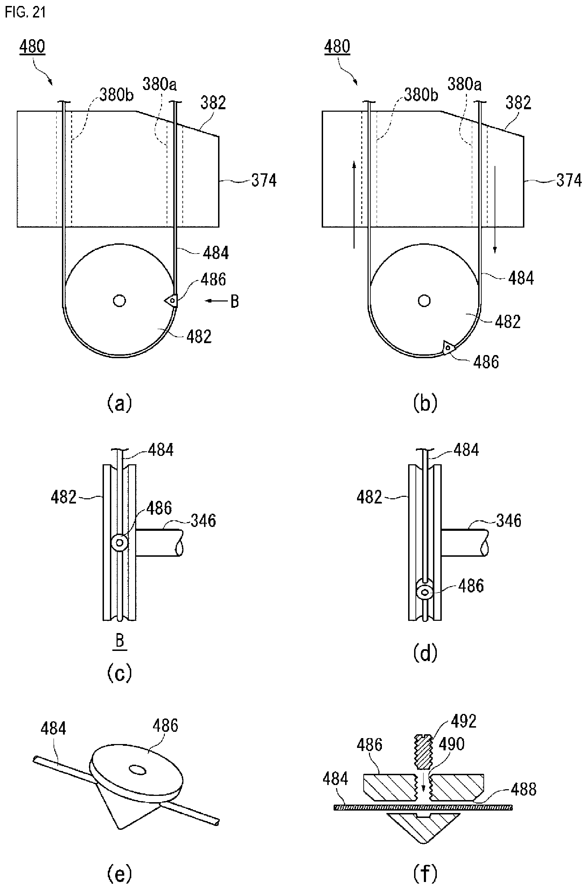

FIG. 21 depicts a modified example (restraint unit 480) of the restraint unit 308 of FIG. 15. FIG. 21(a) is a diagram depicting the restraint unit 480 corresponding to FIG. 15(a). The restraint unit 480 differs in configuration from the restraint unit 308 in that it includes a pulley 482 and a wire 484 instead of the gear 350a and the chain 376 of FIG. 15(a).

Similar to the chain 376 (see FIG. 15(a)), the wire 484 passes through the through holes 380a, 380b and passes through the restraint blocks 374, and the like, with the first end and the second end secured to the front restraint block 378, and the middle portion exposed through the rear end restraint block 374 and wound around the pulley 482.

FIG. 21(b) is a diagram depicting the restraint unit 480 corresponding to FIG. 15(b). Since the through hole 380a passes through the tapered portion 382 of the restraint block 374 and the like, when the pulley 482 rotates and the wire 484 in the through hole 380a is wound and pulled rearward, each restraint block tilts toward the tapered portion 382. As a result, the entire restraint unit 480 is curved toward the seat cushion part 306 (see FIG. 10(b)).

FIG. 21(c) is a view of the pulley 482 in the direction of arrow B in FIG. 21(a). The wire 484 is secured to the pulley 482 using a wedge 486.

FIG. 21(d) is a diagram depicting a state in which the pulley 482 in FIG. 21(c) has rotated. The wire 484 is secured to the pulley 482 by a wedge 486, so that when the pulley 482 rotates, the wire 484 is pulled out through the through hole 380a of the restraint block 374 (see FIG. 21(b)).

FIG. 21(e) is a perspective view of the wedge 486 of FIG. 21(a). The wedge 486 is conical in shape and has the wire 484 passing therethrough perpendicular to the axis thereof.

FIG. 21(f) is a cross-sectional view of wedge 486 of FIG. 21(e). The wedge 486 can be secured onto the wire 484 by passing the wire 484 through a through hole 488 and fastening a set screw 492 in a central screw hole 490.

In this manner, by utilizing the pulley 482 and the wire 484, each restraint block 372 (see FIG. 15(b)) can be tilted toward the seat cushion part 306 (see FIG. 10(b)) by pulling the wire 484 rearward, and the restraint unit 480 can be deformed into a curved shape extending from the side to the front of the seat cushion part 306.

Each of the protective devices described above can also be implemented as a device that supplements a knee airbag. For example, a configuration where only the knee airbag operates when the position of the seat track is within a prescribed distance from the instrument panel can be implemented, and where each of the protective devices operates in addition to the knee airbag only when the position of the seat track is located rearward of this prescribed position.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicle occupant protection device mounted in a vehicle.

### DESCRIPTION OF CODES

100. Protection device, 102. Seat, 103. Seat frame, 104. Occupant, 105a, 105b. Side frame, 106. Seat cushion, 107. Seat back part, 108a, 108b. Restraint unit, 109. Peripheral portion, 110a, 110b. Weakened part, 111. Support bracket, 112. Slide unit, 114. Cover, 115. Tab, 116. Slide base, 120. Slide shaft, 124a to 124d. Bolt, 126. Slide table, 128. Motor, 130. Shaft, 138a, 138b. Bolt, 140a, 140b. Spacer, 141a, 141b. Through hole, 142a, 142b. Bolt hole, 144. Pinion gear, 146. Shaft, 150a, 150b. Gear, 152. Motor, 153. Gear box, 172. Restraint block, 174. Restraint block, 176. Chain, 176a. First end, 176b. Middle portion, 176c. Second end, 178. Restraint block, 180a. Through hole, 182. Tapered portion, 200a, 200b. Restraint unit, 202. Shaft, 202a, 202b. Shoulder portion, 204a, 204b. Restraint unit, 206a, 206b. Corners, 208a, 208b. Restraint unit, 210. Headrest, 212a, 212b. Peripheral portion, 224. Camera, 226. Radar, 228. LiDar, 230. ECU, 232. Collision prediction signal, 234. Control unit, 236. Limit switch, 260. Seat slider unit, 262. Seat slider, 264. Guide bracket, 268. Absorber bar, 270. Seat adjuster, 280. Restraint unit, 282. Pulley, 284. Wire, 286. Wedge, 288. Through hole, 290. Screw hole, 292. Set screw, 300. Protection device, 302. Seat, 304. Occupant, 306. Seat cushion, 307. Seat back part, 308. Restraint unit, 308a, 308b. Restraint unit, 310. Protection device, 312. Seat side panel, 312a, 312b. Seat side panel, 314. Cover, 316. Slit, 318. Insertion hole, 320. Guide rail, 320a, 320b. Guide rail, 322a, 322b. Connection part, 324a, 324b. Bolt, 326. Slide block, 326a, 326b. Slide block, 328a, 328b. Pin hole, 330a, 330b. Shear pin, 332a, 332b. Pin hole, 334. Hook, 336a, 336b. Bolt hole, 338a, 338b. Bolt, 340a, 340b. Spacer, 342a, 342b. Bolt hole, 344. Pulley, 346. Shaft, 350a, 350b. Gear, 352. Spool, 354. Pulley wire, 356a, 356b. Bolt, 358. Base part, 360a, 360b. Gripping part, 362. Slit, 364. Actuator, 366. Wire, 368. Bracket, 370a, 370b, 370c. Bolt, 372. Restraint block, 374. Restraint block, 376. Chain, 376a. First end, 376b. Middle portion, 376c. Second end, 378. Restraint block, 380a, 380b. Penetrating hole, 382. Tapered portion, 400. Pulley, 402. Shaft, 420. Actuator, 422. Protection device, 424. Camera, 426. Radar, 428. LiDar, 430. ECU, 432. Collision prediction signal, 434. Control unit, 436. Limit switch, 440. Restraint unit, 442. Rotation actuator, 444. Protection device, 446. Linear actuator, 460. Protection device, 462. Wire, 464a, 464b, 464c. Pulley, 480. Restraint unit, 482. Pulley, 484. Wire, 486. Wedge, 488. Through hole, 490. Hole, 492. Set screw.

## Claims

1. A vehicle occupant protection device comprising:
a vehicle seat; and
one or more restraint units for restraining an occupant seated in the vehicle seat in the event of a vehicle emergency, wherein
the seat has a seat cushion part that supports the buttocks of the occupant and a seat back part that supports the back of the occupant, and
the restraint unit is configured to dynamically deform from a peripheral portion of the seat back part to wrap around in front of the occupant in the event of a vehicle emergency, thereby restraining the occupant.

2. The vehicle occupant protection device according to claim 1, wherein the restraint unit is dynamically deformed so as to wrap around the peripheral portion of the seat back part to the front of the occupant in the event of a vehicle emergency, thereby restraining the upper body or head of the occupant.

3. The vehicle occupant protection device according to claim 2, further comprising an impact absorbing mechanism that absorbs impact when the restraint unit restrains the upper body or head of the occupant, and the impact absorbing mechanism causes one or both of the seat cushion part and the seat back part to move forward in conjunction with the dynamic deformation of the restraint unit in the event of a vehicle emergency.

4. The vehicle occupant protection device according to claim 3, wherein the impact absorbing mechanism includes a weakened part provided on a frame of the seat back portion, the weakened part deforming so as to cause the seat back portion to move forward in conjunction with the dynamic deformation of the restraint unit in the event of a vehicle emergency.

5. The vehicle occupant protection device according to claim 3, wherein the impact absorbing mechanism includes a seat slider unit that is provided on a floor of the vehicle and supports the seat cushion part, and the seat slider unit causes the seat cushion part to move forward in conjunction with dynamic deformation of the restraint unit in the event of a vehicle emergency.

6. The vehicle occupant protection device according to claim 2, wherein the restraint unit has a plurality of restraint blocks connected so as to be aligned in the front-to-back direction of the seat back part in a non-operation state, and all or some of the plurality of restraint blocks have a tapered portion on seat back part side.

7. The vehicle occupant protection device according to claim 6, further comprising:
a slide shaft provided on the peripheral portion of the seat back part so as to extend in the front-to-back direction of the seat back part and slidably retain the restraint unit; and
a first motor that slides the restraint unit forward in the event of the emergency.

8. The vehicle occupant protection device according to claim 6 or 7, wherein the restraint unit has a chain or wire that passes through and connects the plurality of restraint blocks, the chain or wire passes through the tapered portion of each of the plurality of restraint blocks, and the chain or wire is pulled rearward in conjunction with the forward movement of the restraint unit, causing each of the plurality of restraint blocks to tilt toward the tapered portion, thereby causing the restraint unit to undergo the dynamic deformation.

9. The vehicle occupant protection device according to claim 8, wherein the restraint unit further includes a gear for winding the chain or a pulley for winding the wire, and a second motor for rotating the gear or the pulley, and the gear or the pulley rotates to wind up the chain or the wire, thereby pulling the chain or the wire rearward.

10. The vehicle occupant protection device according to any one of claims 2, 6, and 7, wherein a plurality of the one or more restraining units are provided, and a pair of the plurality of restraining units are provided so as to be positioned on each of the peripheral portions on both sides of the seat back part in the width direction.

11. The vehicle occupant protection device according to claim 1, wherein in the event of a vehicle emergency, the restraint unit is dynamically deformed so as to extend forward from a side part of the seat cushion part and bend inward in the width direction of the seat cushion part to restrain the occupant near the knees from the front.

12. The vehicle occupant protection device according to claim 11, wherein the restraint unit has a plurality of restraint blocks connected so as to be aligned in the front-to-back direction of the seat cushion part in a non-operation state, and all or some of the plurality of restraint blocks have a tapered portion on seat cushion part side.

13. The vehicle occupant protection device according to claim 12, further comprising:
a guide member provided on a side of the seat cushion part so as to extend in the front-to-back direction of the seat cushion part and slidably retain the restraint unit; and
an actuator that slides the restraint unit forward in the event of the emergency.

14. The vehicle occupant protection device according to claim 12 or 13, wherein the restraint unit has a chain or wire that passes through and connects the plurality of restraint blocks, the chain or wire passes through the tapered portion of each of the plurality of restraint blocks, and the chain or wire is pulled rearward in conjunction with the forward movement of the restraint unit, causing each of the plurality of restraint blocks to tilt toward the tapered portion, thereby causing the restraint unit to undergo the dynamic deformation.

15. The vehicle occupant protection device according to claim 14, wherein the restraint unit further includes a prescribed pulley and a gear that rotates in conjunction with the pulley, the chain or wire is a chain that is meshed with the gear, and the vehicle occupant protection device further includes a pulley wire that connects the seat cushion part and the pulley, and when the restraint unit moves forward, the pulley and the gear rotate by being pulled by the pulley wire, and the gear winds up the chain, thereby pulling the chain rearward.

16. The vehicle occupant protection device according to claim 15, wherein the chain or the pulley is plastically deformed by a load applied when an occupant is restrained, thereby making the chain immovable.

17. The vehicle occupant protection device according to any one of claims 11 to 13, wherein a plurality of the one or more restraint units are provided, and a pair of the plurality of restraint units are provided so as to be disposed on each of both sides of the seat cushion part in the width direction.
